# EUROPÄISCHE PATENTANMELDUNG

(11) **EP 4 234 324 A1**
(43) Veröffentlichungstag der Anmeldung: **30.08.2023**
(21) Anmeldenummer: 23156779.3
(22) Anmeldetag: 15.02.2023
(51) Int. Cl.: B60N 2/34, B60P 3/38, B60N 2/30

(54) **REISEMOBIL MIT EINEM EINBAUSYSTEM**

(30) Priorität: 24.02.2022 DE 102022104483
(71) Anmelder: Richter, Kai, 38106 Braunschweig (DE)
(72) Erfinder: Richter, Kai, 38106 Braunschweig (DE)
(74) Vertreter: Gramm, Lins & Partner Patent- und Rechtsanwälte PartGmbB

(57) **Zusammenfassung**

Die Erfindung betrifft ein Reisemobil mit einem Einbausystem (2), wobei das Einbausystem (2) eine Sitzbank (4) und eine Bettverlängerung (6) aufweist, wobei die Sitzbank (4) wenigstens ein Sitzelement (10) und wenigstens ein Lehnenelement aufweist, das a. relativ zu dem wenigstens einen Sitzelement (10) schwenkbar angeordnet ist, b. in eine Sitzposition, in der es eine Rückenlehne bildet, und c. in eine Liegeposition bringbar ist, in der es zusammen mit der Bettverlängerung (6) eine Liegefläche bildet, wobei wenigstens ein Lehnenelement ein Staulehnenelement (12) ist, das wenigstens einen Stauraum (18) zum Lagern von Gegenständen und wenigstens einen Zugang (32) und wenigstens ein Rückhalteelement (34) aufweist, wobei der Stauraum (18) in der Sitzposition des Staulehnenelementes (12) durch den wenigstens einen Zugang(32) zugänglich ist und das wenigstens eine Rückhalteelement (34) eingerichtet ist, in dem Stauraum (18) gelagerte Gegenstände in dem Stauraum (18) gegen Herausfallen zu sichern.

## Beschreibung

Die Erfindung betrifft ein Reisemobil mit einem Einbausystem, wobei das Einbausystem eine Sitzbank und eine Bettverlängerung aufweist, wobei die Sitzbank wenigstens ein Sitzelement und wenigstens ein Lehnenelement aufweist, das relativ zu dem wenigstens einen Sitzelement schwenkbar angeordnet ist, in eine Sitzposition in der es eine Rückenlehne bildet, und in eine Liegeposition bringbar ist, in der es zusammen mit der Bettverlängerung eine Liegefläche bildet.

Unter Reisemobilen werden im Sinne der vorliegenden Anmeldung Wohnmobile, Wohnwagen, Wohnbusse, Wohnaufbauten für Kraftfahrzeuge und insbesondere zum Reisemobil aus- oder umgebaute Kleinbusse, Kleintransporter und Pritschenwagen verstanden.

Reisemobile sind seit langem aus dem Stand der Technik bekannt und werden beispielsweise als mobile Unterkunft bei Urlaubsfahrten und Ausflügen verwendet. Sie bieten die Möglichkeit, in ihnen zu übernachten und weisen dazu in der Regel wenigstens eine, vorzugsweise mehrere Schlafmöglichkeiten auf. Diese weisen in der Regel eine ebene Fläche auf, auf die eine Matratze, Luftmatratze oder sonst eine Unterlage aufgelegt werden, kann, auf der der Benutzer des Reisemobils schlafen kann. Einige Reisemobile verfügen über eine Schlafmöglichkeit, bei der Matratzenelemente in die Liegeflächen integriert sind, sodass das Auflegen einer weiteren Unterlage entfällt. Reisemobile verfügen in der Regel zudem über eine Möglichkeit, warme Mahlzeiten zuzubereiten und gegebenenfalls eine kleine sanitäre Einrichtung, etwa eine Toilette und eine Dusche sowie ein kleines Waschbecken. Alle diese Einrichtungen benötigen Platz und belegen einen Teil des in Reisemobilen knappen Bauraumes. Der Bauraum, der im Reisemobil zur Verfügung steht, wird daher möglichst optimal ausgenutzt und es wird versucht Staumöglichkeiten zu schaffen und Gegenstände und Einrichtungen des Reisemobils möglichst mehrfach in unterschiedlichen Funktionen zu nutzen.

Bei der multifunktionalen Ausgestaltung des Innenraums wird häufig die Sitzanordnung besonders gestaltet, sodass sie nicht nur als Sitzgelegenheit, sondern auch als Liegemöglichkeit verwendet werden kann. Eine solche Ausgestaltung ist in der DE 20 2004 011 018 U1 offenbart. Die Sitzanordnung weist eine Sitzbank, eine Rückenlehne und einen Liegeflächenabschnitt auf. Die Rückenlehne ist in Richtung zum Liegeflächenabschnitt hin abklappbar. Bei abgeklappter Rückenlehne bilden die Sitzbank, die Rückenlehne und der Liegeflächenabschnitt eine durchgehende Liege aus.

Die DE 20 2011 001 307 U1 betrifft eine Bett- und Sitzeinheit für Reisemobile. Die Bett- und Sitzeinheit weist zwei Betthälften auf. Durch Hochklappen der ersten Betthälfte und Zurückschieben der zweiten Betthälfte lässt sich die Betteinheit in eine Sitzeinheit umwandeln. Der Freiraum zwischen der hochgeklappten ersten Betthälfte und der Fahrzeug-Außenwand ist als Stauraum nutzbar. Die zweite Betthälfte weist einen Bettkasten auf, der durch Hochklappen der Liege- bzw. Sitzfläche zugänglich wird.

Trotz dieser und weiterer aus dem Stand der Technik bekannten Lösungen ist Stauraum in Reisemobilen knapp.

Aufgabe der Erfindung ist es daher, ein Reisemobil bereitzustellen, das zusätzlichen Stauraum bietet.

Die Erfindung löst die gestellte Aufgabe durch ein Reisemobil gemäß dem Oberbegriff des Anspruchs 1, das sich dadurch auszeichnet, dass wenigstens ein Lehnenelement ein Staulehnenelement ist, das wenigstens einen Stauraum zum Lagern von Gegenständen und wenigstens einen Zugang und wenigstens ein Rückhalteelement aufweist, wobei der Stauraum in der Sitzposition des Staulehnenelementes durch den wenigstens einen Zugang zugänglich ist und das wenigstens eine Rückhalteelement eingerichtet ist, in dem Stauraum gelagerte Gegenstände in dem Stauraum gegen Herausfallen zu sichern.

Der Erfindung liegt die Erkenntnis zugrunde, dass auch an dieser Stelle innerhalb wenigstens eines Lehnenelementes wenigstens ein Stauraum sinnvoll angeordnet werden kann, obwohl dieser Stauraum seine Lage und Orientierung verändert, wenn das Lehnenelement aus der Sitzposition in Liegeposition oder umgekehrt gebracht wird.

In der Sitzposition des Staulehnenelementes ist der Stauraum durch den wenigstens einen Zugang zugänglich. Dies bedeutet nicht, dass der Zugang permanent geöffnet oder auch nur permanent sichtbar ist, es bedeutet lediglich, dass Gegenstände, die in dem Stauraum gelagert sind, aus diesem durch den Zugang entfernt werden können, wenn sich das Staulehnenelement in der Sitzposition befindet und dass Gegenstände, die in dem Stauraum gelagert werden sollen, durch den Zugang in ihn eingebracht werden können, wenn sich das Staulehnenelement in der Sitzposition befindet. Dazu kann es nötig sein, den Zugang zu öffnen und/oder freizulegen. Eine Veränderung der Position des Staulehnenelementes aus der Sitzposition heraus ist jedoch nicht notwendig. Der Zugang ist vorzugsweise durch wenigstens ein Abdeckelement abgedeckt oder abdeckbar. Wird das Abdeckelement bewegt oder von dem Staulehnenelement entfernt, ist der Zugang geöffnet. Das wenigstens eine Abdeckelement ist vorzugsweise das wenigstens eine Rückhalteelement. Wenn das Abdeckelement den wenigstens einen Zugang abdeckt, hindert es die in dem Stauraum enthaltenen Gegenstände am Herausfallen und sichert sie so.

Alternativ oder zusätzlich dazu kann das Rückhalteelement auch ein Netz oder ein Gitter sein, das der Zugang zumindest teilweise, vorzugsweise jedoch vollständig überspannt. Wenn das Rückhalteelement nur einen Teil des Zugangs überspannt, ist vorzugsweise der nicht überspannte Teil des Zugangs klein genug, um zu verhindern, dass Gegenstände aus dem Stauraum durch diesen nicht überspannten Teil des Zugangs herausfallen. Das Rückhalteelement ist vorzugsweise elastisch ausgebildet. Es ist vorzugsweise als ein Netz oder ein Stoff, beispielsweise ein Textil oder Gewebe, ausgebildet, das durch wenigstens ein elastisches Band in Position gehalten wird. In dieser Position überspannt das Rückhalteelement den Zugang. Soll ein Gegenstand aus dem Stauraum entfernt werden, wird das elastische Band so gespannt und damit verlängert, dass der Zugang zumindest teilweise, vorzugsweise vollständig freigegeben wird. Dazu kann das Band beispielsweise nach unten gedrückt werden, wenn es sich zuvor am oberen Rand des Zugangs befand. Vorzugsweise ist das elastische Band am oberen Rand des Zugangs angeordnet, wenn sich das Staulehnenelement in der Sitzposition befindet. Alternativ oder zusätzlich ist das Netz oder der Stoff selbst elastisch ausgebildet.

Bevorzugt weist das Staulehnenelement ein solches Rückhalteelement und zusätzlich wenigstens ein Abdeckelement auf, das den Zugang wie oben beschrieben abdeckt.

Um das Lehnenelement von der Sitzposition in die Liegeposition zu bringen, wird es vorzugsweise umgeklappt, also insbesondere um eine Schwenkachse verschwenkt. Dabei sind im Wesentlichen zwei Schwenkrichtungen möglich. In einer ersten Ausgestaltung wird das Lehnenelement nach vorn geklappt. Die Fläche des Lehnenelementes, die mit dem Rücken eines Benutzers in der Sitzposition in Kontakt kommt, ist dann in der Liegeposition nicht mehr zugänglich. Vorzugsweise liegt sie auf der Sitzfläche der Sitzbank auf und/oder wird mittels Beinen am Boden des Fahrzeugs abgestützt, um in der die Liegefläche bildenden Position ausreichende Stabilität zu bieten. Alternativ dazu wird das Lehnenelement nach hinten geklappt, um es von der Sitzposition in die Liegeposition zu bringen. Dann bildet die Fläche des Lehnenelementes, die mit dem Rücken des Benutzers in Kontakt kommt, einen Teil der Liegefläche.

Das Einbausystem verfügt neben der Sitzbank über die Bettverlängerung, die einen Teil der Liegefläche bildet. Die Bettverlängerung ist vorzugsweise in Fahrtrichtung hinter der Sitzbank angeordnet. Sie ist beispielsweise unbeweglich im Reisemobil befestigt. Sie ist vorzugsweise derart angeordnet, dass sie nicht bewegt werden muss, um mit dem Lehnenelement die Liegefläche zu bilden. Dazu ist sie vorzugsweise entsprechend erhöht positioniert, um mit der Liegefläche der in die Liegeposition gebrachten Lehnenelemente vorzugsweise eine eben Fläche auszubilden. Unter dieser Bettverlängerung liegt dann vorzugsweise ein weiterer Gepäckraum. Vorzugsweise ist die Bettverlängerung mit Stützen, Füßen und/oder Beinen ausgestattet, um in der die Liegefläche bildenden Position eine ausreichende Stabilität zu bieten. Alternativ oder zusätzlich dazu ist die Bettverlängerung an Befestigungselementen befestigbar, die an der Innenseite des Reisemobils angeordnet sind. Diese sind beispielsweise in Form von serienmäßig oder nachgerüsteten Halteschienen oder Verzurr-Ösen ausgebildet, an denen die Bettverlängerung mittels Schrauben oder Gurten befestigt wird, oder in Form von Vorsprüngen, auf die die Bettverlängerung aufgelegt wird.

Alternativ dazu kann die Bettverlängerung auch bewegbar im Reisemobil befestigt sein. Die Bettverlängerung ist beispielsweise an der Sitzbank, dem Lehnenelement oder dem Sitzelement schwenkbar oder relativ zu dem Sitzelement schwenkbar angeordnet. Um die Liegefläche zu bilden, wird dann einerseits das Lehnenelement in die Liegeposition gebracht und andererseits auch die Bettverlängerung relativ zu dem Sitzelement bewegt, vorzugsweise verschwenkt.

In einer bevorzugten Ausgestaltung wird das Lehnenelement nach vorn geklappt. Um die vollständige Liegefläche zu bilden wird die Bettverlängerung, die in dieser Ausgestaltung an der in Fahrtrichtung hinteren Seite der Sitzbank befestigt ist, ebenfalls umgeklappt. Vorzugsweise weist die Bettverlängerung mehrere Elemente auf, die schwenkbar aneinander angeordnet sind und jeweils zueinander aus geklappt werden, um die Liegefläche zu bilden.

Vorzugsweise ist das wenigstens eine Lehnenelement und/oder die Bettverlängerung mehrteilig ausgebildet. Die verschiedenen Teile sind vorzugsweise unabhängig voneinander schwenkbar und/oder bewegbar ausgebildet. So ist es beispielsweise möglich, dass das Lehnenelement zwei nebeneinander angeordnete Teile aufweist, die unabhängig voneinander aus der Sitzposition in die Liegeposition gebracht werden können. Wird nur eines der beiden Teile in die Liegeposition gebracht, wird beispielsweise eine Schlafmöglichkeit für eine Person geschaffen, während für zwei Personen beide Teile des Lehnenelementes in die Liegeposition gebracht werden.

Der wenigstens ein Zugang ist vorzugsweise an der Seite des Sitzelementes angeordnet, an der sich der Benutzer anlehnt, wenn sich das Lehnenelement in der Sitzposition befindet. Diese Seite wird im Folgenden die Vorderseite des Lehnenelementes genannt. Der Vorderseite gegenüber liegt die Rückseite des Lehnenelementes, mit der der Rücken des Benutzers beim Sitzen nicht in Kontakt kommt. In einer bevorzugten Ausgestaltung zeigt die Vorderseite des Lehnenelementes im Reisemobil nach vorn. Dies bedeutet, dass ein Benutzer, der auf der Sitzbank sitzt, in Fahrtrichtung, also nach vorn, blickt. Es ist jedoch auch möglich, dass die Vorderseite des Lehnenelementes in Fahrtrichtung nach hinten zeigt. Ein Benutzer, der in diesem Zustand auf der Sitzbank sitzt, lehnt sich mit dem Rücken an die Vorderseite des Lehnenelementes an, blickt jedoch in die Richtung, die der Fahrtrichtung entgegengesetzt ist, also nach hinten.

Vorzugsweise ist wenigstens ein Zugang an der Oberseite, die die Vorderseite des Lehnenelementes mit der Rückseite des Lehnenelementes verbindet, angeordnet. Die Oberseite wird so genannt, weil sie in der Sitzposition des Lehnenelementes nach oben zeigt.

Vorzugsweise weist wenigstens ein Staulehnenelement wenigstens eine Polsterabdeckung auf, durch die der wenigstens eine Zugang abdeckbar ist. Die Polsterabdeckung bildet in diesem Fall vorzugsweise das oben bereits beschriebene Abdeckelement. Das Polsterelement verfügt bevorzugt über einen starren Rahmen, beispielsweise aus Holz oder Kunststoff, der mit einem Polster versehen ist, das mit einem Bezug überspannt ist. Damit lässt sich die optische Anmutung individuell gestalten und der Komfort der Sitzbank verbessern. Die Polsterabdeckung ist vorzugsweise zusätzlich zum Rückhalteelement vorhanden. Alternativ dazu bildet sie das Rückhalteelement aus. Alternativ dazu handelt es sich bei der Polsterabdeckung um ein rahmenloses Kissen, das mittels Befestigungselementen, beispielsweise Formschlusselemente wie Klettverschlusselemente und/oder Druckknöpfen, oder Kraftschlusselemente, wie beispielsweise Magneten, an einem anderen Element des Lehnenelementes, beispielsweise dessen Grundkörper, befestigt oder befestigbar ist. An diesem anderen Element ist dann ein jeweils korrespondierend ausgebildetes Gegenelement angeordnet.

Vorteilhafterweise ist die Polsterabdeckung abnehmbar an einem Grundkörper wenigstens eines Staulehnenelementes befestigt. Dadurch ist der Zugang des wenigstens einen Staulehnenelementes leicht zu erreichen. Der Grundkörper des Staulehnenelementes ist beispielsweise ein Rahmen aus einem formstabilen Material, beispielsweise Holz, Metall oder Kunststoff. Er ist bevorzugt der Teil des Staulehnenelementes, der dem Staulehnenelement seine Stabilität verleiht. Die Polsterabdeckung ist vorzugsweise mittels wenigstens einer formschlüssigen Verbindung am Grundkörper des Staulehnenelementes befestigt. Dazu ist wenigstens ein Formschlusselement am Grundkörper angeordnet. Dieses Formschlusselement kann ein Teil eines Druckknopfes oder ein Klett-Element sein. An der Polsterabdeckung ist das entsprechende Gegenelement angeordnet. Ist die Polsterabdeckung am Grundkörper befestigt, greifen das jeweilige Formschlusselement und das Gegenelement formschlüssig ineinander ein. Bevorzugt sind mehrere formschlüssige Verbindungen zwischen der Polsterabdeckung und dem Grundkörper herstellbar. Alternativ oder zusätzlich dazu sind weitere Halteelemente vorhanden, beispielsweise Magnetelemente, durch die eine anziehende Kraft zwischen dem Grundkörper des Staulehnenelementes und der Polsterabdeckung wirken können. Alternativ oder zusätzlich dazu verfügt der Grundkörper oder die Polsterabdeckung über wenigstens ein Rastelement, das ausgebildet ist, hinter eine am jeweils anderen Bauteil, also der Polsterabdeckung oder dem Grundkörper, angeordnete Hinterschneidung zugreifen, um Grundkörper und Polsterabdeckung miteinander zu verbinden. Vorzugsweise ist das Rastelement dabei elastisch verformbar. In einer bevorzugten Ausgestaltung verfügt das Rastelement über ein Betätigungselement, beispielsweise einen Hebel, mit dem es derart betätigt werden kann, dass die Verbindung zwischen Rastelement und Hinterschneidung gelöst wird.

Die Polsterabdeckung ist vorzugsweise direkt an dem Grundkörper befestigt. Alternativ ist es möglich, die Polsterabdeckung an einem weiteren Bauteil zu befestigen, das wiederrum an dem Grundkörper des jeweiligen Staulehnenelementes befestigt ist.

Bevorzugt ist die Polsterabdeckung bewegbar an einem Grundkörper wenigstens eines Staulehnenelementes befestigt. In dieser Ausgestaltung ist die Polsterabdeckung relativ zu dem Grundkörper bewegbar, beispielsweise verschiebbar oder schwenkbar. Vorzugsweise ist die Polsterabdeckung über wenigstens ein Scharnier an dem Grundkörper befestigt. Befindet sich das Lehnenelement in der Sitzposition, ist dieses Scharnier vorzugsweise am unteren Ende der Polsterabdeckung angeordnet. Am entgegengesetzten oberen Ende der Polsterabdeckung ist vorzugsweise ein Befestigungselement, beispielsweise ein Formschlusselement oder ein anderes Halteelement angeordnet. Um nun einen Gegenstand in den Stauraum zu legen oder aus dem Stauraum zu entnehmen wird das Befestigungselement gelöst und die Polsterabdeckung kann um die Schwenkachse des Scharniers relativ zum Grundkörper verschwenkt werden. Dadurch wird der Zugang freigelegt und ist zugänglich. Gegebenenfalls muss dann noch das Rückhalteelement geöffnet oder entfernt werden.

Vorzugsweise wird anstelle des Scharniers wenigstens ein Streifen eines flexiblen, vorzugsweise jedoch unelastischen Materials, beispielsweise Leder oder Stoff, verwendet. Dies hat den Vorteil, dass die Polsterabdeckung nicht nur um eine feste Schwenkachse oder entlang einer durch das Scharnier vorgegebenen Schwenktrajektorie verschwenkbar ist, sondern zusätzlich auch eine von der Länge des Streifens abhängende lineare Bewegungen und Kippbewegungen möglich sind. Dies ist insbesondere dann von Vorteil, wenn beispielsweise Teile der Inneneinrichtung in den Schwenkbereich hineinragen oder das Sitzelement der Sitzbank eine Polsterung aufweist, die ansonsten eine Verschwenkung der Polsterabdeckung des Lehnenelementes um eine feste Schwenkachse verhindern oder zumindest behindern würde.

Vorzugsweise weist wenigstens ein Staulehnenelement wenigstens einen weiteren Zugang auf, durch den der wenigstens eine Stauraum in der Liegeposition des Staulehnenelementes zugänglich ist. Dies ist insbesondere dann von Vorteil, wenn der erste genannte Zugang, durch den der Stauraum in der Sitzposition des Staulehnenelementes zugänglich ist, in der Liegeposition des Staulehnenelementes nicht zugänglich ist. Dies ist beispielsweise der Fall, wenn der erste genannte Zugang an der Vorderseite des Staulehnenelements angeordnet ist und das Staulehnenelement nach vorne geklappt oder verschwenkt wird, um aus der Sitzposition in die Liegeposition zu gelangen. Unabhängig von der Orientierung der Sitzbank im Reisemobil bedeutet dies, dass die Fläche, die in der Sitzposition mit dem Rücken des Benutzers in Kontakt kommt, nun an der Sitzfläche des Sitzelementes anliegt oder zumindest in Richtung auf diese verschoben oder verschwenkt wurde. Diese Fläche wird auch als Vorderseite des Lehnenelementes bezeichnet. Vorzugsweise ist der weitere Zugang an der der Vorderseite des Lehnenelementes gegenüberliegenden Rückseite des Lehnenelementes angeordnet. Vorzugsweise verfügt auch der weitere Zugang über ein Rückhalteelement, sodass Gegenstände, die sich im Stauraum befinden, gegen Herausfallen gesichert sind.

Vorteilhafterweise weist wenigstens ein Lehnenelement einen Lattenrost auf, der in der Liegeposition den von dem Lehnenelement gebildeten Teil der Liegefläche bildet. Auf diese Weise kann der Komfort des Einbausytems in der Liegeposition verbessert werden. Bevorzugt weisen einige, besonders bevorzugt alle Lehnenelemente einen Lattenrost auf. Vorzugsweise weist auch die Bettverlängerung einen Lattenrost auf, der einen weiteren Teil der Liegefläche bildet. Bevorzugt weist der Lattenrost der Bettverlängerung und/oder der Lattenrost des Lehnenelementes ein Kopfteil auf, das im Wesentlichen den Kopfbereich der Liegefläche ausbildet. Das Kopfteil ist vorzugsweise verschwenkbar an einem Grundkörper des Lattenrosts angeordnet, sodass das Kopfteil in verschiedene Winkelpositionen relativ zum übrigen Teil der Liegefläche gebracht werden kann.

Bevorzugt weist wenigstens ein Lehnenelement und/oder die Bettverlängerung wenigstens ein Matratzenelement auf, sodass auf das Mitführen einer zusätzlichen Schlafauflage und/oder einer Matratze verzichtet werden kann.

Vorzugsweise weist das Lehnenelement wenigstens eine Tasche auf, deren Abmessungen an die Abmessungen des wenigstens einen Stauraumes angepasst sind und die durch den zumindest einen Zugang in den Stauraum bringbar und aus ihm entfernbar ist. Durch eine solche Tasche ist es möglich, dass der Benutzer des Reisemobils die Gepäckstücke, beispielsweise Kleidungsstücke oder Handtücher, die er in dem Stauraum unterbringen und/oder transportieren möchte, zunächst in die Tasche hineinlegen kann und dann die verpackte Tasche beispielsweise aus der Wohnung zum Reisemobil tragen oder transportieren kann. Ein langwieriges stückweises Bepacken des Stauraums entfällt somit. Zudem sind die Gepäckstücke innerhalb der Tasche auf dem Weg von einer Wohnung zum Reisemobil oder umgekehrt vor Witterungseinflüssen, beispielsweise Regen, geschützt. Es ist daher von Vorteil, wenn die Tasche wasserdicht ausgebildet ist. Vorzugsweise entspricht die Abmessung der Tasche in wenigstens einer Richtung der Abmessung des Stauraums. Dies bedeutet, dass in dieser einen Richtung die Tasche möglichst genau, vorzugsweise mit einer Abweichung von weniger als 5 cm, besonders bevorzugt weniger als 3 cm, optimalerweise exakt, in den Stauraum hineinpasst. Besonders bevorzugt entsprechen die Abmessungen der Tasche in jeder Richtung denen des Stauraums.

Bevorzugt weist das Rückhalteelement wenigstens ein Formschlusselement, insbesondere ein Klettverschlusselement, und/oder wenigstens ein Kraftschlusselement, insbesondere einen Magneten, und die Tasche ein korrespondierend ausgebildetes Gegenelement auf. Diese Ausgestaltung erlaubt ein schnelles Verstauen der Tasche im Stauraum und bietet zudem den Vorteil, dass kein weiteres Rückhalteelement erforderlich ist. Geeignete Formschlusselemente sind unter anderem Klettverschlüsse, Druckknöpfe, Reißverschlüsse, korrespondierend ausgebildete Klemmflächen, Schraubverbindungen sowie Schnapp- und Rastverbindungen. Alternativ oder zusätzlich dazu weist das Rückhalteelement wenigstens ein Kraftschlusselement, insbesondere ein Magnetelement auf. Besonders bevorzugt verfügt die Tasche über einen Taschenzugang, der beispielsweise mittels eines Reißverschlusses, verschließbar ist.

Vorzugsweise ist der Taschenzugang in der Sitzposition des Staulehnenelementes zugänglich. Vorzugsweise sind die Abmessungen des Taschenzugangs an die Abmessungen des wenigstens einen Zugangs des Staulehnenelementes angepasst. Vorzugsweise ist dieser Taschenzugang so positioniert, dass er zum Zugang des Stauraums weist, wenn die Tasche im Stauraum angeordnet ist. So ist es möglich, dass der Inhalt der Tasche durch den Taschenzugang und den wenigstens einen Zugang zugänglich bleibt, solange sich das Lehnenelement in der Sitzposition befindet. Besonders bevorzugt ist der Taschenzugang beispielsweise mittels eines Reißverschlusses verschließbar. Vorzugsweise entspricht die Abmessung des wenigstens einen Taschenzugangs in wenigstens einer Richtung der Abmessung des wenigstens einen Zugangs des Staulehnenelementes. Bevorzugt beträgt die Abweichung in dieser einen Richtung weniger als 5 cm, besonders bevorzugt weniger als 3 cm. Besonders bevorzugt entspricht die Abmessung des wenigstens einen Taschenzugangs in dieser Richtung exakt der Abmessung des wenigstens einen Zugangs des Staulehnenelementes. Besonders bevorzugt entsprechen die Abmessungen des Taschenzugangs in jeder Richtung denen des wenigstens einen Zugangs des Staulehnenelementes.

Bevorzugt weist wenigstens ein Lehnenelement und/oder die Bettverlängerung wenigstens ein integriertes Matratzenelement auf. Dadurch entfallen weitere Umbauschritte, um die Sitzbank in eine bequeme Schlafmöglichkeit zu überführen. Zudem wird durch diese Ausgestaltung insgesamt Platz gespart, da kein zusätzlicher Stauraum für eine große Matratze benötigt wird. Besonders bevorzugt weisen sowohl die Lehnenelemente als auch die Bettverlängerung wenigstens ein integriertes Matratzenelement auf, sodass eine möglichst große Liegefläche gebildet wird.

Vorteilhafterweise ist wenigstens ein Lehnenelement lösbar befestigt, vorzugsweise lösbar an der Sitzbank, einer Unterkonstruktion der Sitzbank oder wenigstens einem Sitzelement befestigt. Das Lehnenelement ist vorzugsweise mittels eines Schnappverschlusses, eines Rastbolzens oder einer Schraubverbindung lösbar im Inneren des Reisemobils, besonders bevorzugt an der Sitzbank, der Unterkonstruktion oder einem Sitzelement befestigt. Vorzugsweise ist das Lehnenelement in unterschiedlichen Positionen an der Sitzbank, der Unterkonstruktion oder dem Sitzelement befestigbar, so dass die Höhe der von dem Lehnenelement in der Liegeposition ausgebildeten Liegefläche veränderbar ist.

Bevorzugt weist die Sitzbank mehrere Lehnenelemente, vorzugsweise mehrere Staulehnenelemente auf. Besonders bevorzugt sind alle Lehnenelemente als Staulehnenelement ausgebildet, sodass insgesamt möglichst viele Lehnenelemente als Stauraum genutzt werden können.

In einer bevorzugten Ausgestaltung weist die Bettverlängerung wenigstens ein Liegeelement auf, das relativ zu der Sitzbank beweglich angeordnet ist und in eine Liegeposition bringbar ist, in der es gemeinsam mit wenigstens einem Lehnenelement die Liegefläche bildet, wenn sich das wenigstens eine Lehnenelement in der Liegeposition befindet. Das Liegeelement kann ausziehbar und/oder verschwenkbar an der Bettverlängerung angeordnet sein. Es ist auch denkbar, das Liegeelement als separates Bauteil auszuführen und über ein Verbindungselement an der Bettverlängerung zu befestigen.

Die Erfindung löst die gestellte Aufgabe zudem durch ein Einbausystem der hier beschriebenen Art für ein Reisemobil. Die Erfindung löst die gestellte Aufgabe zudem durch eine Sitzbank für ein derartiges Einbausystem.

Nachfolgend werden Ausführungsbeispiele anhand der Figuren erläutert. Gleiche Bezugszeichen bezeichnen gleiche Bauteile. Es zeigen:
- Figur 1 -: ein Einbausystem gemäß einem ersten Ausführungsbeispiel der vorliegenden Erfindung mit dem Lehnenelement in der Sitzposition;
- Figur 2 -: das Einbausystem aus Figur 1 mit dem Lehnenelement in der Liegeposition;
- Figur 3 -: ein Staulehnenelement mit zwei Polsterabdeckungen;
- Figur 4 -: ein Staulehnenelement mit einem Zugang;
- Figur 5 -: ein Staulehnenelement ohne Polsterabdeckung;
- Figur 6 -: ein Staulehnenelement mit einem weiteren Zugang; und
- Figur 7 -: eine Seitenansicht eines Staulehnenelements mit zwei Stauräumen.

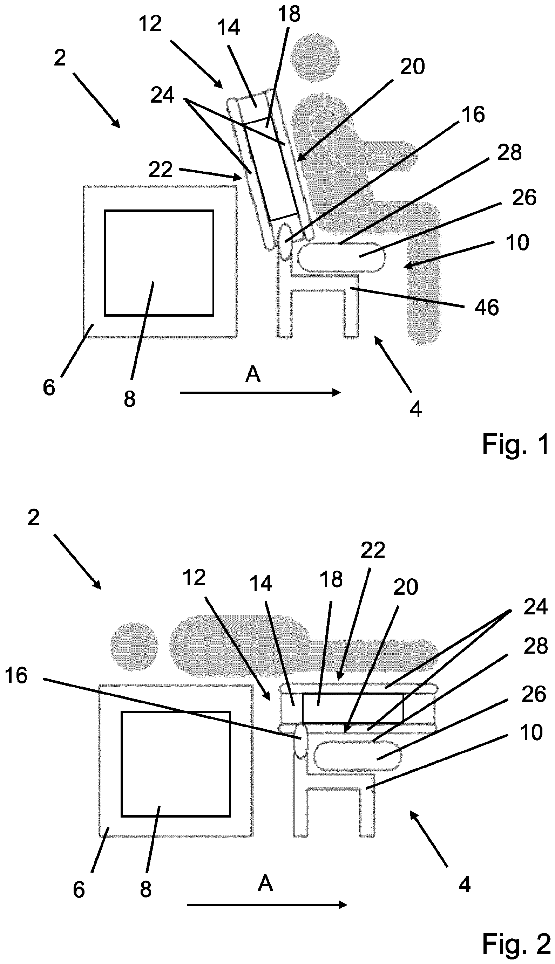

Figur 1 zeigt eine schematische Darstellung eines Einbausystems 2 gemäß einem Ausführungsbeispiel der vorliegenden Erfindung. Das Einbausystem weist eine Sitzbank 4 und eine Bettverlängerung 6 auf. Die Bettverlängerung 6 ist in Fahrtrichtung A hinter der Sitzbank 4 angeordnet. In der Bettverlängerung 6 ist ein Gepäckraum 8 angeordnet, in dem Gegenstände verstaut werden können. Alternativ ist die Bettverlängerung 6 ohne Gepäckraum 8 ausgeführt. Es besteht auch die Möglichkeit, einen Gepäckraum 8 unterhalb der Bettverlängerung 6 anzuordnen. Die Sitzbank 4 weist ein Sitzelement 10 und ein Staulehnenelement 12 mit einem Grundkörper 14 auf. Das Sitzelement 10 verfügt über eine Unterkonstruktion 46 und ein Sitzpolster 26.

Das Staulehnenelement 12 ist über ein Verbindungselement 16 gelenkig an dem Sitzelement 10, im gezeigten Ausführungsbeispiel an dessen Unterkonstruktion 46, gelagert und um eine Schwenkachse schwenkbar. Das Verbindungselement 16 ist beispielsweise mittels eines Schnappverschluss, Rastbolzen oder einer Schraubverbindung befestigt, sodass das Staulehnenelement 12 lösbar befestigbar ist und bei Bedarf entfernt werden kann. Alternativ dazu ist das Staulehnenelement 12 direkt an der Sitzbank 4, deren Sitzelement 10, beispielsweise an der Unterkonstruktion 46 oder an einem anderen Element im Inneren des Reisemobils befestigt.

Es besteht die Möglichkeit das Staulehnenelement 12 in verschiedenen Positionen an dem Verbindungselement 16 zu befestigen, sodass beispielsweise die Höhe des Staulehnenelements 12 individuell an den Nutzer anpassbar ist. Durch Verschwenken des Staulehnenelements 12 um die Schwenkachse ist das Staulehnenelement 12 von der Sitzposition in die Liegeposition bringbar oder umgekehrt. In der Sitzposition bildet das Staulehnenelement 12 eine Rückenlehne für eine auf der Sitzbank 4 sitzende Person aus.

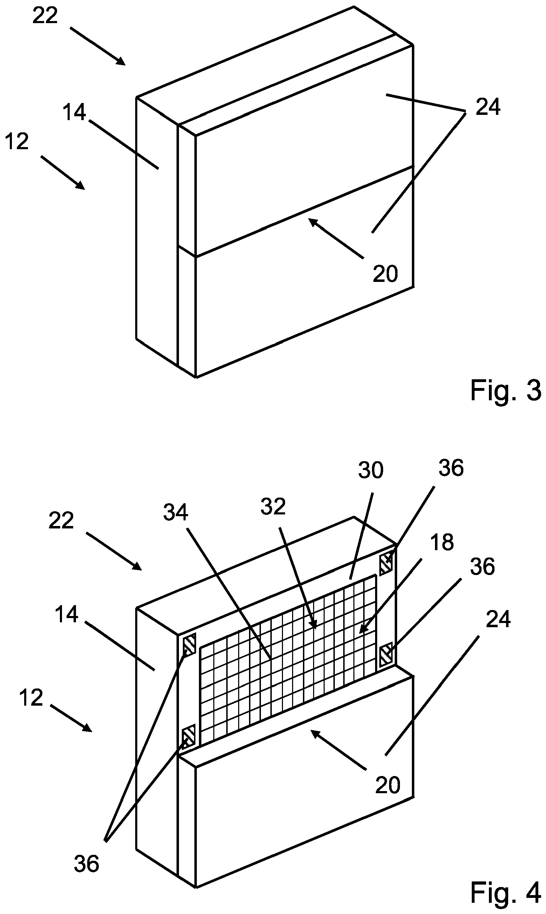

Innerhalb des Grundkörpers 14 ist ein Stauraum 18 angeordnet, der über einen nicht gezeigten Zugang zugänglich ist. An einer Vorderseite 20 weist das Staulehnenelement 12 eine Polsterabdeckung 24 auf. Die Vorderseite 20 ist diejenige Seite, die mit dem Rücken des Benutzers der Sitzbank 4 in Kontakt kommt, wenn sich das Staulehnenelement 12 in Sitzposition befindet. Die gegenüberliegende Seite des Staulehnenelements 12 wird als Rückseite 22 bezeichnet. Die Polsterabdeckung 24 ist über ein Formschlusselement, beispielsweise einen Klettverschluss oder Druckknöpfe, an dem Grundkörper 14 des Staulehnenelements 12 befestigt und dient in der gezeigten Ausführung sowohl als Abdeckelement, das einen Zugang 32 des Stauraums 18 verdeckt, als auch als Rückhalteelement 34, das in dem Stauraum 18 gelagerte Gegenstände gegen Herausfallen sichert. Alternativ dazu ist das Rückhalteelement 34 beispielsweise als Netz oder Gitter ausgeführt, das den Zugang 32 zumindest teilweise überspannt. Zugang 32 und Rückhalteelement 34 sind beispielsweise in den Figuren 4, 5 und 6 dargestellt.

An der Rückseite 22 weist das Staulehnenelement 12 in der gezeigten Ausführung ebenfalls eine Polsterabdeckung 24 auf, die einen rückseitigen Zugang des Stauraums 18 verdeckt und ebenfalls als Rückhalteelement dient. Alternativ dazu ist die Rückseite des Staulehnenelements 12 geschlossen ausgebildet. Es ist auch möglich, die Rückseite des Staulehnenelements 12 teilweise oder vollständig als Lattenrost auszuführen, dessen Zugänge mit entsprechenden Abdeckelementen und/oder Rückhalteelemente versehen sind.

An dem Sitzelement 10 ist ein Sitzpolster 26 angeordnet, das die Sitzfläche 28 ausbildet. Die Sitzfläche 28 ist die Fläche, auf die ein Benutzer sitzen kann, wenn sich das Staulehnenelement 12 in der Sitzposition befindet.

Figur 2 zeigt die in Figur 1 gezeigte Ausführungsform des Einbausystems 2, bei der sich das Staulehnenelement 12 in der Liegeposition befindet. Die Liegeposition wird in dieser Ausführungsform dadurch erreicht, dass das Staulehnenelement 12 zur Sitzfläche 28 hin um eine Schwenkachse geschwenkt wird. Die Liegefläche wird durch die Oberseite der Bettverlängerung 6 und die Rückseite 22 des Staulehnenelements 12 gebildet. Alternativ dazu ist das Einbausystem 2 so ausgebildet, dass die Liegeposition durch ein Verschwenken des Staulehnenelements 12 zur Bettverlängerung 6 hin erreicht wird. In dieser Ausführung weist die Bettverlängerung 6 beispielsweise Vorsprünge und/oder einen vertieften Abschnitt auf, um das Staulehnenelement 12 aufzunehmen.

Das Bettverlängerung 6 ist in der gezeigten Ausführung starr und von der Sitzbank 4 beabstandet. Alternativ dazu ist die Bettverlängerung 6 bewegbar, insbesondere ausziehbar und/oder verschwenkbar in dem Innenraum des Reisemobils angeordnet. Es besteht auch die Möglichkeit, die Bettverlängerung 6 an der in Fahrtrichtung A hinteren Seite der Sitzbank 4 zu befestigen, so dass die Bettverlängerung 6 umgeklappt werden kann, um die Liegefläche auszubilden. Dazu kann die Bettverlängerung 6 auch mehrere Elemente aufweisen, die schwenkbar und/oder verschiebbar aneinander angeordnet sind. In der gezeigten Ausführungsform wird das Staulehnenelement 12 durch ein nicht gezeigtes Formschlusselement, beispielsweise einen lösbaren Rastbolzen, in der Liegeposition fixiert. Alternativ wird das Staulehnenelement 12 in der gewünschten Liegeposition gehalten, indem es auf der Sitzfläche 28 aufliegt und/oder mittels nicht dargestellter, vorzugsweise vom Staulehnenelement 12 abklappbarer Beine auf dem Fahrzeugboden abgestützt wird.

Figur 3 zeigt die schematische Darstellung eines Staulehnenelements 12 mit zwei Polsterabdeckungen 24. Die Polsterabdeckungen sind an der Vorderseite 20 übereinander angeordnet und mittels Formschlusselementen an dem Grundkörper 14 des Staulehnenelements 12 befestigt. Die Polsterabdeckungen 24 können alternativ auch seitlich zueinander an dem Grundkörper 14 angebracht werden. An der Rückseite 22 weist das Staulehnenelement 12 keine weiteren Polsterabdeckungen 24 auf.

Figur 4 zeigt das Staulehnenelement 12 aus Figur 3, bei dem die obere Polsterabdeckung 24 abgenommen wurde. Der Grundkörper 14 weist an der Vorderseite 30 einen Zugang 32 auf, durch den der Stauraum 18 zugänglich ist. Der Zugang wird durch ein Rückhalteelement 34 teilweise abgedeckt, das in der gezeigten Ausführung als Netz ausgebildet ist. Alternativ dazu besteht die Möglichkeit, das Rückhalteelement 34 als Gitter oder Stoff, insbesondere ein Textil oder ein Gewebe, auszuführen. Das Rückhalteelement 34 wird durch ein nicht dargestelltes elastisches Band in Position gehalten. An dem Grundkörper 14 sind Halteelemente 36 in Form von Klettverschlusselementen angeordnet. Die Polsterabdeckungen 24 weisen korrespondierend ausgebildete nicht dargestellte Gegenelemente auf, sodass sie über die Halteelemente 36 an dem Grundkörper 14 des Staulehnenelements 12 befestigt werden können. Weitere geeignete Halteelemente sind Druckknöpfe, Magnetelemente, Rastelemente sowie andere Formschlusselemente.

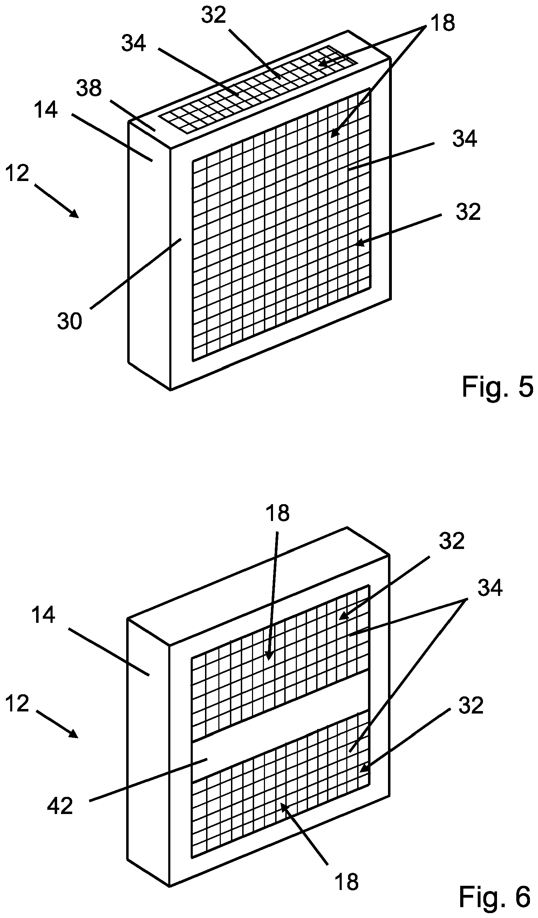

Figur 5 zeigt ein Staulehnenelement 12 mit einem Grundkörper 14, der an der Vorderseite 30 einen Zugang 32 und an der Oberseite 38 einen zweiten Zugang 32 aufweist. Der Stauraum 18, der mehrere voneinander unterteilte Abteile aufweisen kann, ist in der Sitzposition des Staulehnenelementes 12 durch beide Zugänge 32 zugänglich. Beide Zugänge 32 sind jeweils durch ein Rückhalteelement 34 teilweise verdeckt. Die Rückhalteelemente 34 sind jeweils als Netz ausgebildet, sodass man in den Stauraum 18 blicken kann. Grundsätzlich ist es auch denkbar, für die beiden Zugänge 32 unterschiedliche Rückhalteelemente 34 vorzusehen.

Figur 6 zeigt eine Ausführung des Staulehnenelements 12 mit einem Grundkörper 14, der zwei Zugänge 32 aufweist, die von einem Rückhalteelement 34 abgedeckt werden. Die beiden Zugänge machen zwei unterschiedliche Stauräume 18 zugänglich, die innerhalb des Grundkörpers 14 angeordnet sind. Der Grundkörper 14 weist ein Trennelement 42 auf, das die beiden Stauräume 18 voneinander räumlich trennt. Bei Ausführungsformen mit mehreren Zugängen 32 besteht die Möglichkeit, diese nicht nur übereinander, sondern alternativ oder ergänzend auch nebeneinander anzuordnen. Dementsprechend können auch mehrere Trennelemente 42 zum Abtrennen der Zugänge 32 zwischen diesen angeordnet sein.

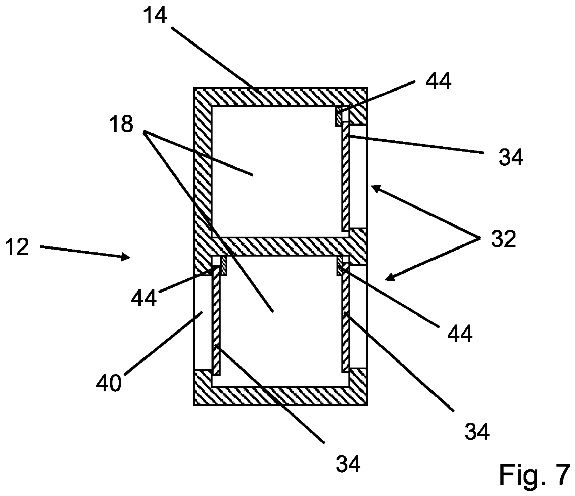

Figur 7 zeigt eine Schnittdarstellung eines Staulehnenelements 12 mit einem Grundkörper 14. Innerhalb des Grundkörpers sind zwei Stauräume 18 angeordnet, die jeweils über einen Zugang 32 zugänglich sind. Die Zugänge 32 werden von Rückhalteelementen 34 abgedeckt. Die Rückhalteelemente 34 sind beispielsweise als Stoffelemente ausgeführt. Die Rückhalteelemente 34 sind an der Unterseite durch nicht dargestellt Verbindungselemente, beispielsweise Nägel oder Klebeelemente, an dem Grundkörper befestigt. An der Oberseite werden sie durch ein elastisches Halteelement 44 in Position gehalten. Die elastischen Halteelemente 44 sind dehnbar gestaltet, sodass das zugehörige Rückhalteelement 34 von einem Benutzer, der Gegenstände aus dem Stauraum 18 entnehmen oder in ihn hineinlegen möchte, so bewegt werden kann, dass der zugehörige Zugang 32 geöffnet wird. Wenn das Rückhalteelement 34 von dem Benutzer nicht mehr berührt wird, wird der Zugang 32 durch die Rückstellkraft des elastischen Halteelements 44 wieder verschlossen. Es besteht die Möglichkeit die elastischen Halteelemente 44ergänzend oder alternativ an anderen Seiten der Rückhalteelemente 34 anzuordnen, sodass der Zugang von einer anderen Seite aus zugänglich wird. Die Verbindungselemente können entsprechend auch an anderen Seiten angeordnet sein.

An der gegenüberliegenden Seite des Staulehnenelementes 12 befindet sich ein weiterer Zugang 40, durch den der Stauraum 18 in der Liegeposition des Staulehnenelementes 12 zugänglich ist. In der gezeigten ausführungsform wird das Staulehnenelement 12 im Uhrzeigersinn um etwa 90° gekippt, um es von der dargestellten Sitzposition in die Liegeposition zu bringen. Auch der weitere Zugang 40 ist mit einem Rückhalteelement 34 und einem elastischen Halteelement 44 ausgerüstet.

### Bezugszeichenliste

- 2: Einbausystem
- 4: Sitzbank
- 6: Bettverlängerung
- 8: Gepäckraum
- 10: Sitzelement
- 12: Staulehnenelement
- 14: Grundkörper
- 16: Verbindungselement
- 18: Stauraum
- 20: Vorderseite des Staulehnenelements
- 22: Rückseite des Staulehnenelements
- 24: Polsterabdeckung
- 26: Sitzpolster
- 28: Sitzfläche
- 30: Vorderseite des Grundkörpers
- 32: Zugang
- 34: Rückhalteelement
- 36: Halteelement
- 38: Oberseite des Grundkörpers
- 40: weiterer Zugang
- 42: Trennelement
- 44: elastisches Halteelement
- 46: Unterkonstruktion

## Patentansprüche

1. Reisemobil mit einem Einbausystem (2), wobei das Einbausystem (2) eine Sitzbank (4) und eine Bettverlängerung (6) aufweist, wobei die Sitzbank (4) wenigstens ein Sitzelement (10) und wenigstens ein Lehnenelement aufweist, das
a. relativ zu dem wenigstens einen Sitzelement (10) schwenkbar angeordnet ist,
b. in eine Sitzposition, in der es eine Rückenlehne bildet, und
c. in eine Liegeposition bringbar ist, in der es zusammen mit der Bettverlängerung (6) eine Liegefläche bildet,
**dadurch gekennzeichnet, dass** wenigstens ein Lehnenelement ein Staulehnenelement (12) ist, das wenigstens einen Stauraum (18) zum Lagern von Gegenständen und wenigstens einen Zugang (32) und wenigstens ein Rückhalteelement (34) aufweist, wobei der Stauraum (18) in der Sitzposition des Staulehnenelementes (12) durch den wenigstens einen Zugang(32) zugänglich ist und das wenigstens eine Rückhalteelement (34) eingerichtet ist, in dem Stauraum (18) gelagerte Gegenstände in dem Stauraum (18) gegen Herausfallen zu sichern.

2. Reisemobil nach Anspruch 1, **dadurch gekennzeichnet, dass** wenigstens ein Staulehnenelement (12) wenigstens eine Polsterabdeckung (24) aufweist, durch die der wenigstens eine Zugang (32) abdeckbar ist.

3. Reisemobil nach Anspruch 2, **dadurch gekennzeichnet, dass** die Polsterabdeckung (24) abnehmbar an einem Grundköper (14) wenigstens eines Staulehnenelementes (12) befestigt ist.

4. Reisemobil nach Anspruch 2 oder 3, **dadurch gekennzeichnet, dass** die Polsterabdeckung (24) bewegbar an einem Grundköper (14) wenigstens eines Staulehnenelementes (12) befestigt ist.

5. Reisemobil nach einem der vorherigen Ansprüche, **dadurch gekennzeichnet, dass** wenigstens ein Staulehnenelementes (12) wenigstens einen weiteren Zugang (40) aufweist, durch den der wenigstens eine Stauraum (18) in der Liegeposition des Staulehnenelementes (12) zugänglich ist.

6. Reisemobil nach einem der vorherigen Ansprüche, **dadurch gekennzeichnet, dass** wenigstens ein Lehnenelement einen Lattenrost aufweist, der in der Liegeposition den von dem Lehnenelement gebildeten Teil der Liegefläche bildet.

7. Reisemobil nach einem der vorherigen Ansprüche, **dadurch gekennzeichnet, dass** das Staulehnenelement wenigstens eine Tasche aufweist, deren Abmessungen an die Abmessungen des wenigstens einen Stauraumes (18) angepasst sind und die durch den zumindest einen Zugang (32) in den Stauraum (18) bringbar und aus ihm entfernbar ist.

8. Reisemobil nach Anspruch 7, **dadurch gekennzeichnet, dass** das Rückhalteelement (34) wenigstens ein Formschlusselement, insbesondere ein Klettverschlusselement, und/oder wenigstens ein Kraftschlusselement, insbesondere einen Magneten, aufweist und die Tasche ein korrespondierend ausgebildetes Gegenelement aufweist.

9. Reisemobil nach Anspruch 8, **dadurch gekennzeichnet, dass** die Tasche wenigstens einen Taschenzugang aufweist, der in der Sitzposition des Staulehnenelementes (12) zugänglich ist, wobei bevorzugt die Abmessungen des Taschenzugangs an die Abmessungen des wenigstens einen Zugangs (32) des Staulehnenelementes (12) angepasst sind.

10. Reisemobil nach einem der vorstehenden Ansprüche, **dadurch gekennzeichnet, dass** wenigstens ein Lehnenelement und/oder die Bettverlängerung (6) wenigstens ein integriertes Matratzenelement aufweist.

11. Reisemobil nach einem der vorstehenden Ansprüche, **dadurch gekennzeichnet, dass** wenigstens ein Lehnenelement lösbar befestigt, vorzugsweise lösbar an wenigstens einem Sitzelement (10) befestigt ist.

12. Reisemobil nach einem der vorstehenden Ansprüche, **dadurch gekennzeichnet, dass** die Sitzbank (4) mehrere Lehnenelemente, vorzugsweise mehrere Staulehnenelemente (12) aufweist.

13. Reisemobil nach einem der vorstehenden Ansprüche, **dadurch gekennzeichnet, dass** die Bettverlängerung (6) wenigstens ein Liegeelement aufweist, das relativ zu der Sitzbank (4) beweglich angeordnet ist und in eine Liegeposition bringbar ist, in der es gemeinsam mit wenigstens einem Lehnenelement die Liegefläche bildet, wenn sich das wenigstens eine Lehnenelement in der Liegeposition befindet.

14. Einbausystem (2) für ein Reisemobil nach einem der vorherigen Ansprüche.

15. Sitzbank (4) für ein Einbausystem (2) nach Anspruch 14.
